# EUROPEAN PATENT SPECIFICATION

(11) **EP 3 377 958 B1**
(45) Date of publication and mention of the grant of the patent: **30.04.2025**
(21) Application number: 16838026.9
(22) Date of filing: 21.11.2016
(51) Int. Cl.: G06F 1/16, G06F 13/38

(54) **RAPID PROTOTYPING SYSTEM**
SYSTEM ZUR SCHNELLEN ERSTELLUNG VON PROTOTYPEN
SYSTÈME DE PROTOTYPAGE RAPIDE

(30) Priority: 20.11.2015 IT UB201555775 U
(43) Date of publication of application: 26.09.2018
(73) Proprietor: Bleb Technology S.r.l., 59100 Prato (IT)
(72) Inventor: INNOCENTI, Fabrizio, I-59100 Prato (IT)
(74) Representative: Sach, Greg Robert
(86) International application number: PCT/IB2016/001649
(87) International publication number: WO 2017/085541

(56) References cited:
- EP-A1- 2 163 811
- WO-A1-01/31457
- WO-A1-2011/088012
- WO-A1-2014/077853
- WO-A1-92/08258
- JP-A- H0 917 502
- JP-A- H04 317 899
- JP-U- H0 550 679
- US-A- 2 355 913
- US-A1- 2003 007 321
- US-A1- 2006 136 622
- US-A1- 2008 300 919
- US-A1- 2010 300 747
- US-A1- 2011 225 348
- US-A1- 2011 292 976
- US-A1- 2013 301 202
- US-A1- 2015 072 570
- RAJIB RANA ET AL: "Towards plug-and-play functionality in low-cost sensor network", 2011 SEVENTH INTERNATIONAL CONFERENCE ON INTELLIGENT SENSORS, SENSOR NETWORKS, AND INFORMATION PROCESSING (ISSNIP 2011) : ADELAIDE, AUSTRALIA, 6 - 9 DECEMBER 2011, IEEE, PISCATAWAY, NJ, 6 December 2011 (2011-12-06), pages 265 - 270, XP032111842, ISBN: 978-1-4577-0675-2, DOI: 10.1109/ISSNIP.2011.6146545
- KIM BARAKA ET AL: "Low Cost Arduino/Android-Based Energy-Efficient Home Automation System with Smart Task Scheduling", COMPUTATIONAL INTELLIGENCE, COMMUNICATION SYSTEMS AND NETWORKS (CICSYN), 2013 FIFTH INTERNATIONAL CONFERENCE ON, IEEE, 5 June 2013 (2013-06-05), pages 296 - 301, XP032446671, ISBN: 978-1-4799-0587-4, DOI: 10.1109/CICSYN.2013.47

## Description

### Field of the invention

This Invention concerns the fields of electronics and prototyping related to such a field, in particular this invention might promote a specific sector, which is the one of rapid prototyping in ambit of electronics/electric and of micro and nano-electronics.

More specifically the sector of interest of this invention originally pertains to Arduino, a well-known open source prototyping and development system. Following Arduino many and more advanced prototyping systems have been developed such as: Nanode, Teensy etc. up to the more recent Microduino. The latter, Microduino, constitutes the prior art of interest to define the object of this invention.

Notably, such a system applies to various domains of electric and electronics prototyping (i.e. monitoring and control systems, gauging systems, electro-mechanical devices and actuators) and includes different basic versions with a more or less wide selection of sensors or interconnection features; such a base can be further broadened by adding functionalities through the use of more specific modules. The central unit, which usually includes a micro-controller, is programmed by loading sketches (software programs) that are elaborated, for example, by mean of a PC. In particular, the detailed features of the Microduino alternative, are yet still unclear because the product is still in a launch phase. However, it is sure that the central unit presents a high degree of complexity because it includes a microcontroller and various interconnection interfaces. The micro-controller, in turn, needs an external programming activity made in its own development platform. The Hardware is essentially exposed and results liable to be damaged from external agents, is not exempt from soldering and needs many floating wirings. Moreover, many of the available expansions modules, turn out to be quite complex, thus expensive and, likely, less reliable with respect to simpler modules that in this case cannot be used, because they are not suitable for this kind of management system.

For what said above, the product needs a certain degree of technical preparation from side of the user, and thus just a narrow range of skilled customers can actually use it, to the detriment of a wider range of interested ones, that cannot use it due to the lack of technical/specific knowledges. Therefore in order to use such a product it is necessary to be an expert of the field and, obviously, this fact notably penalizes the device, the system and what else is based on a similar technology, destining it to niche market, even though it is an interesting and technologically innovative product.

### State of the Art

Nowadays there is a growing request on the market for innovative technological systems or devices that are also simple to be used and accessible to a wider market share to allow the widening of their functionality and potentiality. Actually, thinking at the sector of electronic prototyping, we can see it growing day by day and, with it, there is a steady growth in the demand of devices and/or systems suitable to be used to satisfy ever more specific and complex requirements, simplifying, at the same time, the prototyping phase and being themselves not so complex to assemble and/or to design.

The making of a prototype usually goes through the phases of design, production assembly and test of the electronic boards, which bring to the definition of the final product that will be further industrialized and certified. In a market where time to market is fundamental, there is the problem of how to reduce the phases of the making of the prototype and of its validation, in order to increase the productivity and to reduce the costs during the design phase. The technology actually developed and under development in this direction seems to propose innovative features but, as briefly mentioned above, comes also along with several problems.

To make an industrial prototyping operation, usually, people rely on experts of the field, in particular of specific informatics languages etc., to the detriment, for example, of the exploitation of the standard company resources and presumably slowing down some innovation processes, given that just a few, amongst those that might be interested at promoting innovative projects, can have access to a true and proper prototyping phase, for the mentioned problems of complexity, costs, time and shortage of technical knowledge of the available structures.

Further problems related in general to the electronics and micro-electronics prototyping, are due to a scarce flexibility: in many cases, even considering products of recent development, we see that it is necessary to use complex hardware structures to perform simple functions; we'll talk below about it in more detail, when we are describing the specific and advantageous features of this invention.

As an example, there are more user-friendly applications than Arduino to develop systems' prototypes, but such solutions brings additional technical disadvantages such as, for instance, the large dimensions (and costs) as well as limits of shapes related to some prototyping systems, the scarce specialization of sensors and expandability, the complexity of the resulting systems and of the elementary expansion modules, the impossibility of quickly configuring custom functions. Moreover, often, such systems are scarcely reliable.

Prior art systems are described in US 2011/225348 A1 and US 2011/292976 A1.

### Purpose of the invention

The purpose of this invention is to provide a simple but efficient solution to the mentioned problems.

One purpose of this invention is to allow anyone, such as, as an example, companies or privates without specific technical skills, to build in an immediate and efficient way their own prototypes of their own devices.

A further purpose of this invention is therefore to implement a prototyping system that is easy to use.

It is hence a purpose of the present invention to implement a prototyping system, which is quick to set and expand.

It is still a purpose of this invention to implement a prototyping system, which allows unlimited possible expansions of the said system

It is still a purpose of this invention to implement a prototyping system that is accessible to both the experts in the field and the less expert ones and, thus, that can be used on large scale.

A further purpose of this invention is to implement a rapid prototyping system that can therefore be used also outside the mere prototyping carried out at company or industrial level.

It is an essential purpose of this invention to describe such a system that is cheap.

Still, it is a purpose of this invention to describe a system that is practical to use.

Another purpose is to implement a low power system able to work for long time.

### Summary of the invention

The invention is defined in the appended claims.

More specifically the insertion or connection interfaces can allow a direct insertion at hardware level or "Plug and Play", or physical connections. It has to be noted that said interfaces in some alternative realizations might also be not physical ones.

A further advantage is that to considerably wide the market of interest, passing from a device that is mainly used in laboratory and/or in technical ambit (hobbyists and industrial prototyping) to the larger market of the "consumers" and of the accessories for widely used devices such as Smart Phones, Tablets, PCs etc.

In a particularly advantageous way, said rapid prototyping system, is based on communication technologies such as Bluetooth, Wi-Fi, ZIG-BEE, UWB etc. or further technologies that might be implemented and apt to the purpose of the invention.

It should be noted that this constitutes a remarkably advantage with respect to the mentioned Arduino prior art, in fact with Arduino, the central unit itself is not suitable for being used as a low power wireless communication device and hence it cannot be used in larger market segments as those of our interest.

Finally in a further advantageous way said innovative rapid prototyping system could work for a long time, this because the prototyping system herein described bases on a low power wireless technology and typically it could work for months and even years, considering that in a particularly advantageous way, its constituting parts can be powered by common batteries, such as those used for watches. The presence of at least one power supply system makes the said system self-powered.

In a further advantageous way, considering the advantages described until now, it appears evident that said prototyping system is a portable one because, being any so called "bench" or laboratory activity unnecessary, all that it is needed to get the said system to work is already inside the system itself.

### List of the figures:

These and the further advantages achieved with the rapid prototyping system described in this invention, will be further clarified and in-depth analysed with the description of the illustrations in attachment where:
- In fig. 1 it is represented a basic possible implementation of the prototyping system described by the present invention;
- In fig. 2 it is represented another basic possible implementation of the prototyping system described by the present invention;
- In fig. 3 it is represented a further possible implementation of the prototyping system described by the present invention;
- In fig. 4 it is represented an example of configuration or possible operative implementation of the prototyping system described by the present invention;
- In fig. 5 it is represented a further example of configuration or possible operative implementation of the prototyping system described by the present invention;
- In fig. 6 it is represented a further example of configuration or possible operative implementation of the prototyping system described by the present invention;
- In fig. 7 it is represented a last example of configuration or possible operative implementation of the prototyping system described by the present invention.
- In fig. 8 and fig. 9 are described further examples of system's implementation

### Detailed Description

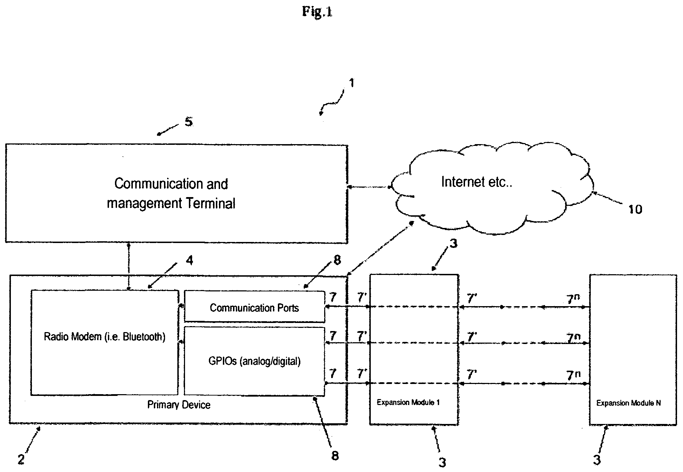

More specifically in figure 1 it is represented a possible basic implementation of the, industrial and not, rapid prototyping system 1 realized in accordance to the present invention that includes a primary device 2, one or more expansion modules 3, where at least one expansion module 3 is physically connected to said primary device 2 and the other expansion modules 3 can be connected to the primary device 2 or among themselves i.e. in series or in parallel or in multiple combinations.

The primary device 2 includes a wireless interface module 4 to communicate with a communication and management terminal 5, at least one physical connection interface 7 with one or a plurality of expansion modules 3 that in turn include one or more physical connection interfaces 7', 7" with as much modules 3 or primary devices 2. Depending on the connected expansion module 3 it can be used a dedicated port such as i.e. an analogue/digital port and/or a serial/parallel/I2C etc.

It should be noted that, in any case, the communication modality between the said device 2 and the communication and management terminal 5 is herein preferably described as a wireless data transmission and reception modality, even though the said connection between said primary device 2 and said communication and management terminal 5 could be realized also through a physical connection, that is through a cable such as, for example, USB, mini USB connection or other. In this basic configuration the primary device 2 communicates with a terminal 5 such as i.e. a tablet, a smartphone, a PC, a dedicated hardware (readers) etc. and/or directly with communication infrastructures 10 such as Internet, Internet of things, clouds etc. and with external devices (here not represented) that will be mentioned in the following possible favourites implementations. The communication with the expansion modules usually occurs through dedicated connections that are interfaces 7 (i.e. serial, parallel, dedicated digital and/or analogue lines), even though it might also be implemented through other not-physical (RF, light, sounds and ultrasounds, etc.) communication technologies. The expansion modules usually consist of elementary modules such as sensors (i.e. temperature, pressure, acceleration etc.) interfaces (i.e. relays, buttons, buzzers, led, displays, etc.) actuators (i.e. electro-valves, motors etc.) and power supply modules (i.e. batteries, DC/DC converter, etc). Again, in other possible implementations the expansion modules can also be more "advanced" that is, for instance, can include peripherals, computational capabilities (CPU) etc. to elaborate the eventual commands sent by terminal 5 and/or autonomously execute more complex operations.

The communication primary device 2 can also have on board a filtering and/or power supply management unit (power supply) including i.e. DC/DC converters, filters, etc. In the basic configuration shown herein, the basic operative functions of system 1 are managed by terminal 5 through, for example, specific applications or programs dedicated to the scope and therefore the primary device 2 acts as an interface for the management of the communications amongst the expansion modules 3 and the terminal 5.

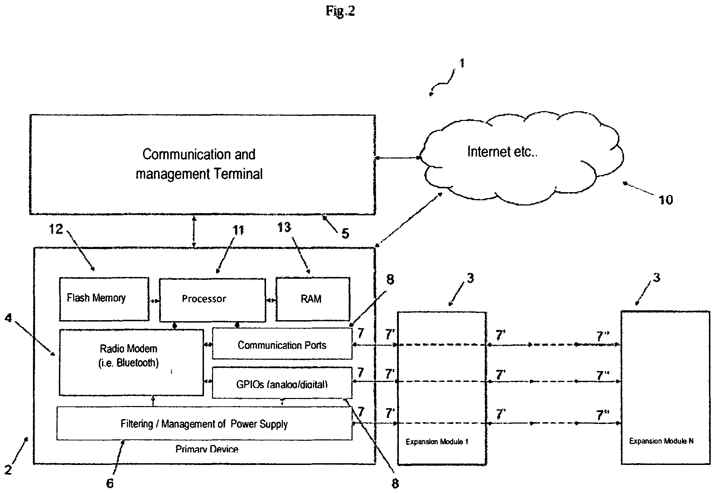

In figure 2 it is represented an alternative possible favourite basic implementation of the said prototyping system 1 where said primary device 2, also includes a power supply filtering unit, a processor 11, including basic elements such as a flash memory 12 and a RAM 13 that also act as internal memory of the prototyping system 1. Said processor 11 with the annexed flash memory 12 and RAM 13 allows the primary device 3 to implement some functionalities even, eventually, without communication with the communication and management terminal 5. In fact, it has to be noted that, in some possible implementations of this invention, the terminal 5 might not be available in phases occurring after the setting at manufacturing.

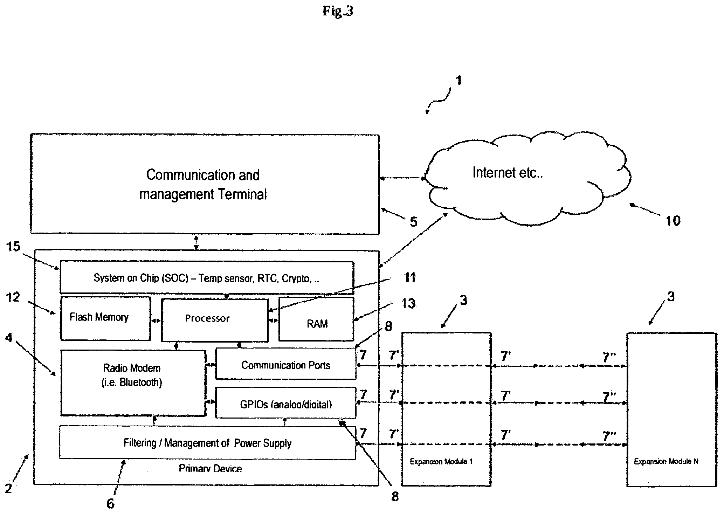

In figure 3 it is represented an example of additional elements that can be included in the primary device 2 of the prototyping system 1 in a particular possible implementation of this invention; in addition to the interface module 4 it is also included a System On Chip 15 (SOC) that comprises for instance an additional sensor and a Real Time Clock (RTC). Said system on chip 15 (SOC) allows to broaden the functionalities of the primary device 2, for instance also including a cryptographic device or a temperature sensor etc. It appears evident to an expert of this field that said primary device 2 allows the provision of multiple basic functionalities with very low costs and power consumption because, as it is known, the parts constituting the system are definitively simple and cheap to realize and assembly.

It is therefore possible to create a wider market which is more attractive for more people, considering the easiness of use that will be better described below, without taking into account that the inclusion of such primary device 2 in said system 1 is innovative indeed.

The mentioned temperature sensor might have different obvious applications, whereas the cryptography match needs of specific applications requiring a high security in data transmission as usually occurs in payment systems (if we would for instance use the system to open the access barriers in a parking and meanwhile manage in total security the payments of said parking; or else for the management of personal information, such as sanitary data, banking accounts or private data of any nature).

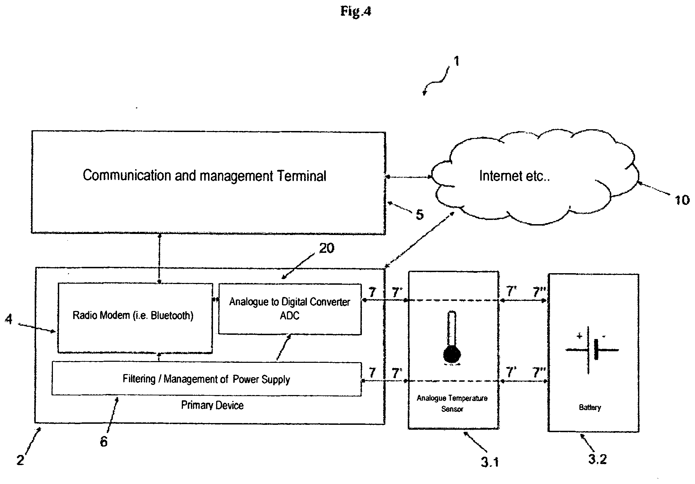

In figure 4 it is represented a possible very simple implementation of the rapid prototyping system 1 described by this invention. In this case, said system 1 includes a primary device 2 configured with a power supply filtering unit 6, a physical connection interface 7 with a first expansion module 3.1 that here is an analogue temperature sensor, connected in turn with a second expansion module 3.2 that here is a battery. The modules 3.1 and 3.2 are interconnected through one or more physical connection interfaces 7'. 7".

It is particularly relevant to underline that here and below standardized means a standard defined from the applicant during the design and the production phase of every part of the rapid prototyping system 1 herein described.

It has to be noted that in a particular advantageous way, said connection interfaces 7 of said at least one primary device 2 and said connection interfaces 7', 7" etc. of said one or more expansion modules 3 are standardized, meaning that are mutually equal and/or compatible each with the other, therefore the number of expansion modules 3 connected amongst themselves and/or with said device can be substantially expanded with no limits, this also because said primary device can recognize a substantially unlimited number of modules connected to it and amongst themselves. In this simple operative configuration, the primary device 2 gets the data from the temperature sensor through an analogue to digital converter ADC 20 allowing the radio modem 4 to transmit the digitalized temperature value. The external expansion modules 3.1, 3.2 are elementary indeed and, as said, are constituted by said analogue temperature sensor (module 3) and by a battery (module 3'), the values from said temperature sensor are sampled from the analogue to digital converter 20 and transmitted from the radio modem 4 to the terminal 5 for their further elaboration. In case of the wireless transmission described in this implementation, such data can be transferred, i.e. via Bluetooth or W-Fi or other suitable technologies that not necessarily employ the radio frequency (i.e. optics, sounds, ultrasounds etc.)

As said before, the prototyping system 1 is totally self-configuring. The communication terminal 5 is in all respects an interface terminal that includes, in a more advantageous way, said communication means that can be set depending on the used primary devices and/or expansion modules, therefore the unexperienced user with any specific knowledge of the sector can put together one or a plurality of different prototyping systems that, when reciprocally interconnected, self-recognize each the other and consequently execute the required function or functions in a completely automated way with respect to the actions of the same user. Therefore the user could interface just with said terminal of said system to set the parameters or some desired functionalities; in this case for instance terminal 5 can be a tablet or a smartphone and said communication means could for instance be specific user friendly applications (Apps) for said devices. Thus, depending on the data sent from the primary device 2 on which the modules 3.1, 3.2 are mounted (where a first self-recognition and self-configuration occurs at hardware level), the terminal 5 further recognises said modules 3.1, 3.2 and consequently allows, through said communication means, the interaction with said the whole device 2 / modules 3.1, 3.2; a further recognition is thus performed at software level through terminal 5.

It should be noted that, as an example, said expansion modules can be sensors, actuators, power supply systems that can also be different from batteries (i.e. solar cells, inductive systems, etc.), or intelligent units, that is equipped in turn with microprocessors apt to autonomously execute further functionalities, etc.

It has to be furtherly noted that said terminal 5 can also be present only during the firmware's configuration of the prototyping system 1 at manufacturing.

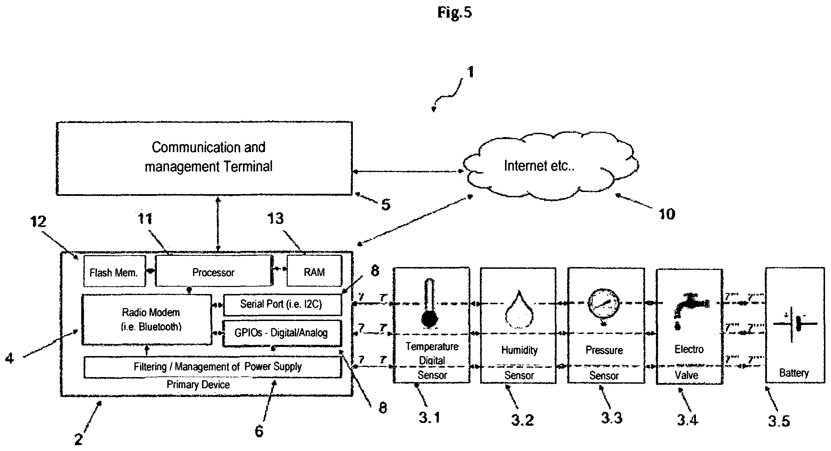

In this configuration, it has been made a Bluetooth device able to measure temperature; an example of a possible extension of the functionality is represented in figure 5.

In the application example of figure 5 it is implemented an intelligent control device to automatically watering plants that in this possible implementation includes a primary device 2 with a processor 11 including basic elements 12, 13 as described in fig. 3, serial 8 ports and the basic elements also described in the figures from 1 to 4. Said primary device 2, is connected to an expansion module 3.1 that includes a digital temperature sensor, a module 3.2 with a humidity sensor in turn connected to a module 3.3 including a pressure sensor connected in turn to an electro-valve module 3.4 (having thus different nature from the previous modules) that is connected in turn to a battery module 3.5.

In this possible implementation the modules from 3.1 to 3.5 are serially interconnected trough communication interfaces 7 of the primary module 2 (even though could also be interconnected in parallel through a specific expansion or in different modes as said before). In the herein described automatic watering system the primary device 2 manages the serial communications of the external modules from 3.1 to 3.4 equipped, as said, with elementary sensors such as temperature, humidity and pressure and is powered up by the battery that has been defined in module 3.5. Such a system activates said electro-valve module 3.4 that is connected to the irrigation pipes. The terminal 5, through a specific software program, interacts with the user and uses the data coming from the sensors to detect the external climatic conditions (barometer) and/or the physical parameters of the plants (i.e. soil humidity). Such a software program can thus control in a smart way the opening of the electro-valve to water the plants, can further compare such values with the meteorological data available on the internet to implement a more sophisticated barometer and manage in the best way the irrigation also using data of timetables and day/night cycles of the specific period. In a further possible implementation , the processor 11 available on the primary device 2 can autonomously take care of watering the plants even in absence of a communication with the terminal 5, basing on the conditions detected from the sensors embedded in the external modules 3.1, 3.2, 3.3; said primary device 2 can hence, in some implementations, operate autonomously.

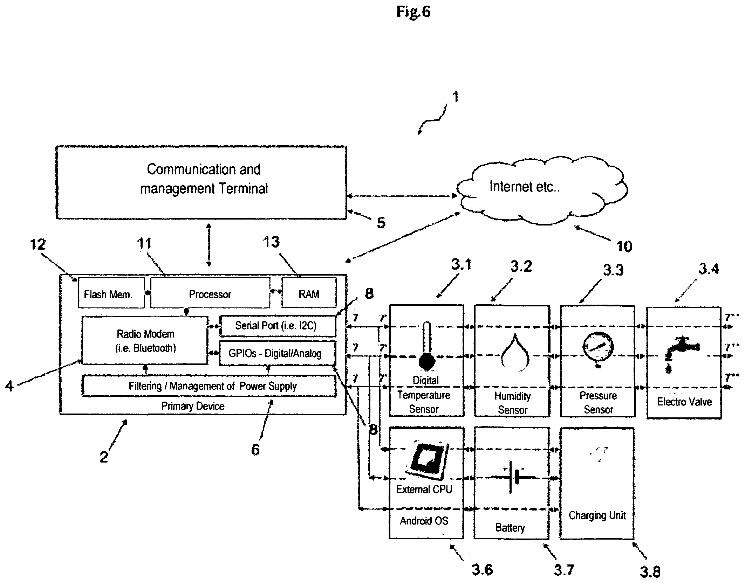

The preferred possible implementation of figure 5, gets furtherly specialized in the possible implementation of figure 6. In addition to the primary device 2 and to the module from 3.1 to 3.5 of figure 5, to the prototyping system 1 of figure 6 it has been added an expansion module 3.6 that, in this case, is a complex intelligent module used to take care of the watering of plants when there is no communication with terminal 5 on the basis of the conditions detected from the sensors of the external expansion modules with the aim to relieve the primary device 2 from specific computational needs; this way the primary device 2 could, for instance, dedicate its own resources, that is processor 11, to the execution of other functionalities. Here are represented a battery module 3.7 and power charging unit module 3.8 to provide a continuous power supply.

It has to be noted that here the connection between modules turns out to be more complex, but in any case thanks to the "plug and play" recognition on which the system bases, each module gets automatically recognized at central level thanks to the primary device 2 and/or to terminal 5 and, consequently, the prototyping system is active and works without the user had to take care of informatics programming or actions of physical electrical or electronic modification of the system 1.

By expanding the number of the usable sensors and/or actuators, it will be possible to build an unlimited number of prototyping systems 1 in a simple and quick way, just combining the different expansion modules 3 that are used to compose every desired functionality. Thanks to the present invention, the time needed to even implement industrial prototypes will reduce itself just to the few seconds needed to physically assemble the different elementary modules each with the other, whereas the validation phase of the innovative prototyping system 1 will be kept at a minimum because the correct functioning of all the main devices 2 and of all the elementary expansion modules 3 will be previously validated from manufacturer during the test phase.

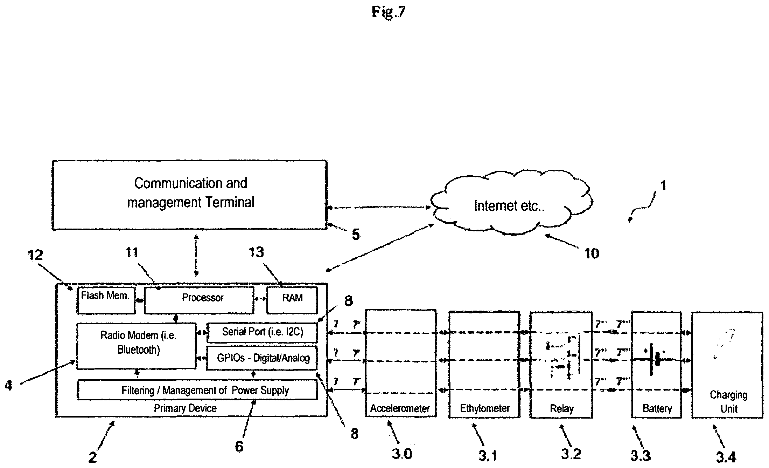

Finally, in figure 7, it is represented a further practical application example of a possible implementation of the rapid prototyping system 1 described by the present invention. The primary device 2, in this case, is the same of figures 2, 5 and 6, whilst the expansion modules here used are an accelerometer module 3.0 connected in turn to an ethylometer module 3.1 connected in turn to a relay module 3.2 connected in turn to a battery module 3.3 connected in turn to a charging unit 3.4.

With such a configuration, we intend to implement a system for the identification and the measurement of alcoholic strength of a driver to allow or not the driver himself the activation of the vehicle's ignition. For instance, in case of the application of such a system to rental and/or private cars, the car's ignition can be activated only in presence of a communication with a specific terminal 5 that identifies the driver. Said terminal 5 will instruct the driver to make a test with the ethylometer that will be available in the vehicle and the said system will allow the start of the vehicle only after the outcome of the test. The system here described is powered by the module 3.3 rechargeable battery and from module charging unit 3.4. The relay module 3.2 in this case allows the start of the car.

It has to be specifically noted that the primary device 2 and the relative expansion modules 3 can have whatever shape which is suitable for the specific implementation of the device or module, depending on the scope of the primary device or of the same expansion module; again, an eventual housing or case for the said device and/or said one o more modules, can have whatever shape which is suitable to the specific purpose. An element might be a shape of a cube, triangle, parallelepiped, cylinder, cone etc., provided that the reciprocal connection interfaces 7 are those standardized as previously defined.

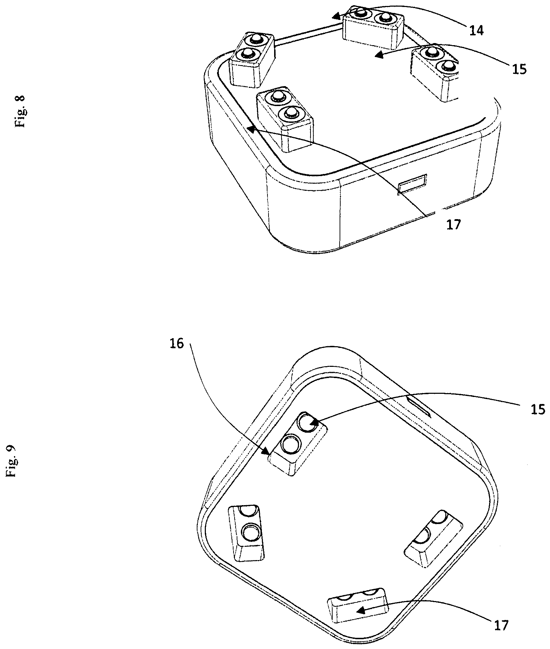

Finally, in figure 8 and in figure 9 are reported examples of implementations of the primary and expansion modules and more specifically of the standardised case.

Said modules advantageously include some standardised connection "pins", that is identical in every particular and shaped in a way to define a univocal connection by the geometric constraints between the modules.

Said pins are implemented through prismatic bodies 14 that support electrical contacts 15 for the communications amongst the modules and the transmission of energy from the battery module to the other modules, shaped in a way to insert themselves in the female cavities 16 included in one of the other modules and including in turn the electrical contacts 15.

Said prismatic bodies and said corresponding female cavities are placed on the modules in an asymmetric way so that to implement an unambiguous coupling.

Said prismatic bodies and said corresponding female cavities are further characterized by having insides 17 typified by a slight conical shape in order to implement a stable coupling between the modules, that is irreversible unless it is applied a sufficient force to detach the modules.

In particular, it has to be noted that the Bluetooth technology is the mostly preferred communication technology between the primary device 2 and said communication and transmission terminal 5, because the present technology turns out to be very low power, cheap, simple to use and handy for this kind of applications. However, as said before, the used communication technology can be of whatever type provided that is suitable for the scope of the present invention: for instance communication technologies such as Wi-Fi, ZIG-BEE, UWB etc. or, again, other communication technologies based on different physical principles (light, sound, ultrasound, etc.)

Furtherly it has to be noted that, differently from the other examples known at the state of the art, the primary device 2 and expansion module 3 do not include a computational unit (CPU).

As a matter of fact, the innovative industrial prototyping system 1 described by the present invention exploits the computational capability of a popular smart phone, tablet, pc or other computational system and does not require a own elaboration and computational system for its own functioning.

In a further preferred implementation of the industrial prototyping system described by this invention, said primary device (2) and said expansion modules (3) are produced in one or a plurality of standard typologies each of said typologies being contradistinguished by a univocal ID for the immediate recognition from side of every other device (2) and/or module (3), said terminal (5) being provided with a computational unit for the automatic recognition of the IDs of the connected primary device (2) and expansion modules (3) and the corresponding automatic configuration of the system and in which the computational capability that is necessary for the automatic recognition and configuration of the primary device (2) and of the relative expansion modules (3) is only provided by said terminal (5) and it is not included internally to the primary device (2) or expansion modules (3).

Thus, the innovative industrial prototyping system 1 described with the present invention presents innovative features for what it does concern the easiness of use and of expansion, the simplicity and the subsequent hardware reliability, the possibility of being managed and controlled through terminal 5 of the last generation, delegating to them the eventual computational complexity through an intuitive user interface. Said prototyping system results, hence and at all the effects, a rapid prototyping system, that allows both the skilled and not skilled users to create new prototypes without the need of informatics knowledges. The same prototype, thanks to the expansion modules here inventively described, could instead perform both simple and extremely complex tasks. The herein described innovative rapid prototyping system could thus in turn constitute a mean for the creation of devices, systems or innovative methods, leaving room to the inventive ability and the problem solving of companies and privates.

As said, in a particular advantageous way, said communication and transmission terminal 5 will be integrated with dedicated communication means (such as i.e. applications for smartphones or programs) allowing to interact with any part of the system in an intuitive, quick, direct and thus user-friendly way.

Finally we ought to remind that amongst the countless advantages described by the present invention there are: the self-recognition and self-configuration at hardware level through a simple connection (physical or not) of the different modules and the device in a "plug and play" mode, the rapid interaction through terminal, the electronics which is substantially protected because, as said, said expansion modules and primary devices can be enclosed in a specific housing or protective box that allows an easy handling; furtherly, this is possible also because said expansion modules and said at least a primary device are standardized in every possible implementation, in other words they do have mutually equal and/or compatible interfaces and substantially mutually communicates through common recognition means. What said makes said expansion modules and said at least a primary device easy to be manufactured and producible in serial quantities. We do observe that in a particularly advantageous way all the advantages mentioned here, which allow the production phase of standardized primary devices and expansion modules bring further advantages in terms of costs reduction.

Lastly it is obviously ever possible to allow the experts of the field to build their own prototyping system in a laboratory environment; in this case, eventually, the modules and the device could also be available without the protective housing.

The expansion and the diffusion of said rapid prototyping system could furthermore benefit of an Open Source Platform to further develop the opportunity of using said rapid prototyping system.

These are just some of the possible advantageous implementations of the innovative rapid prototyping system 1 described by the present invention. It has to be noted that, every variants in dimension of the parts constituting the system 1, shape, material, type of the connection interface between the modules and with the terminal, number of the parts included in the device or further means acting as the constituting elements herein described, are to be considered object of the present invention, as long as they fall in the scope of the annexed claims.

## Claims

1. A rapid prototyping system (1) for electrical and electronical prototyping comprising at least one primary device (2), a terminal (5) for interacting with at least a part of the primary device (2), a plurality of additional expansion modules (3) connected to said primary device (2), wherein said expansion modules (3) are substantially standardized modules to allow communication and recognition of each of said expansion modules (3) from said at least one primary device (2), said modules (3) being connected to said primary device (2) and to each other, by means of connection interfaces (7,7',7"), wherein said connection interfaces (7, 7', 7", 7n) comprise reciprocally connectable pins placed on the expansion modules (3) and on the primary device (2), to couple said modules together and with said primary device, said pins comprising electrical contacts (15) for the communication between the modules and the transmission of energy and being configured in such a way to be inserted in female cavities (16) comprised in the modules (3), wherein said pins are implemented by means of prismatic bodies (14) supporting electrical contacts (15) shaped in a way to insert themselves in the female cavities (16) included in one of the other modules and including in turn the electrical contacts (15), wherein for each connection interface said prismatic bodies (14) consist of a first set of two prismatic bodies (14) that are inclined one with respect to the other and a second set of two further prismatic bodies (14) that are inclined one with respect to the other in such a way to be placed specularly with respect to said first set of two prismatic bodies (14) with respect to a plane that is perpendicular to the module (3), two of the prismatic bodies being parallel to each other, to edges of the respective module, and to the plane; said primary device (2) being configured to recognize each of said expansion modules (3) connected to said device (2), by recognition of an ID that univocally identifies each expansion module (3), said recognition being a prerequisite for the self-configuring at the primary device (2) level which by recognizing the module assigns dynamically to it a specific address for bus communication between at least said device and said at least one module (3), wherein said terminal (5) interacts with said primary device (2) for setting of parameters and receiving data from said expansion modules (3).

2. The rapid prototyping system (1) according to claim 1, wherein said at least one primary device (2) and said expansion modules (3) are substantially closed or comprised in an outer casing, said casing comprising at least said connection interfaces (7,7',7") such as slots or inserting areas for connection to other modules (3) or sensors or additional elements.

3. The rapid prototyping system (1) according to any of the preceding claims, wherein said primary device (2) and said expansion modules (3) are produced in one or a plurality of standard types each of said types being distinguished by a unique ID for the immediate recognition by each other device (2) and/or module (3) .

4. The rapid prototyping system (1) according to any of the preceding claims, wherein said connection interfaces (7) of said at least one primary device (2) and said connection interfaces (7',7", etc.) of said expansion modules (3) are standardized and mutually identical and/or compatible with each other, therefore the number of expansion modules (3) connected between each other and/or with said device (2) is substantially fully expandable, said primary device (2) being self-configuring.

5. The rapid prototyping system (1) according to any of the preceding claims, wherein said connection interfaces (7,7',7'' etc.) are on hardware level direct pluggable i.e. "plug and play".

6. The rapid prototyping system (1) according to any of the preceding claims, wherein each functional element of the rapid prototyping system (1) is comprised in the rapid prototyping system (1), said rapid prototyping system being portable.

7. The rapid prototyping system (1) according to any of the preceding claims, wherein said primary device (2) comprises at least one module (4) for wireless communication for example radio frequency, optical, sound, ultrasonic or further to communicate with said terminal (5).

8. The rapid prototyping system (1) according to claim 7, wherein said primary device (2) comprises at least a power supply system (6) and said module for wireless communication (4) using Bluetooth low energy technology thereby said rapid prototyping system (1) being a low consumption powered system.

9. The rapid prototyping system (1) according to any of the preceding claims, wherein one of the connected expansion modules (3) is a rechargeable battery module (3.3) used for the power supply of the rapid prototyping system.

10. The rapid prototyping system (1) according to any of the preceding claims, wherein said terminal (5) is a tablet, a pc, or a smartphone.

## Patentansprüche

1. Ein Rapid Prototyping-System (1) für elektrische und elektronische Prototypenerstellung, das mindestens ein primäres Gerät (2), ein Terminal (5) zur Interaktion mit mindestens einem Teil des primären Geräts (2), eine Vielzahl zusätzlicher Erweiterungsmodule (3), die mit dem primären Gerät (2) verbunden sind, umfasst, wobei die Erweiterungsmodule (3) im Wesentlichen standardisierte Module sind, die eine Kommunikation und Erkennung jedes der Erweiterungsmodule (3) durch das mindestens ein primäres Gerät (2) ermöglichen, wobei die Module (3) mit dem primären Gerät (2) und miteinander über Verbindungsschnittstellen (7, 7', 7") verbunden sind, wobei die Verbindungsschnittstellen (7, 7', 7", 7n) sich aus wechselseitig verbindbaren Stiften zusammensetzen, die auf den Erweiterungsmodulen (3) und dem primären Gerät (2) angeordnet sind, um die Module miteinander und mit dem primären Gerät zu koppeln, wobei die Stifte elektrische Kontakte (15) für die Kommunikation zwischen den Modulen und die Übertragung von Energie umfassen und so konfiguriert sind, dass sie in weibliche Kavitäten (16) in den Modulen (3) eingesetzt werden, wobei die Stifte durch prismatische Körper (14) implementiert sind, die elektrische Kontakte (15) stützen, die so geformt sind, dass sie sich in die weiblichen Kavitäten (16) eines der anderen Module einsetzen und dabei ebenfalls die elektrischen Kontakte (15) enthalten, wobei für jede Verbindungsschnittstelle die prismatischen Körper (14) aus einem ersten Satz von zwei prismatischen Körpern (14) bestehen, die zueinander geneigt sind, und einem zweiten Satz von zwei prismatischen Körpern (14), die zueinander geneigt sind, sodass sie in Bezug auf den ersten Satz von zwei prismatischen Körpern (14) in einem Spiegelbild zum Modul (3) bezüglich einer Ebene, die senkrecht zum Modul (3) steht, angeordnet sind, wobei zwei der prismatischen Körper zueinander parallel sind, zu den Kanten des jeweiligen Moduls und zur Ebene; das primäre Gerät (2) so konfiguriert ist, dass es jedes der Erweiterungsmodule (3) erkennt, das mit dem Gerät (2) verbunden ist, durch Erkennung einer ID, die jedes Erweiterungsmodul (3) eindeutig identifiziert, wobei diese Erkennung eine Voraussetzung für die Selbstkonfiguration auf der Ebene des primären Geräts (2) ist, das durch Erkennen des Moduls ihm dynamisch eine spezifische Adresse für die Buskommunikation zwischen mindestens diesem Gerät und dem mindestens einen Modul (3) zuweist, wobei das Terminal (5) mit dem primären Gerät (2) zur Einstellung von Parametern und zum Empfangen von Daten von den Erweiterungsmodulen interagiert.

2. Das Rapid Prototyping-System (1) nach Anspruch 1, wobei das mindestens ein primäres Gerät (2) und die Erweiterungsmodule (3) im Wesentlichen in einem äußeren Gehäuse verschlossen oder enthalten sind, wobei das Gehäuse mindestens die Verbindungsschnittstellen (7, 7', 7") wie Schlitze oder Einfügebereiche für die Verbindung mit anderen Modulen (3) oder Sensoren oder zusätzlichen Elementen umfasst.

3. Das Rapid Prototyping-System (1) nach einem der vorhergehenden Ansprüche, wobei das primäre Gerät (2) und die Erweiterungsmodule (3) in einer oder mehreren Standardtypen produzier werden, wobei jeder dieser Typen durch eine eindeutige ID für die sofortige Erkennung durch jedes andere Gerät (2) und/oder Modul (3) unterscheidbar ist.

4. Das Rapid Prototyping-System (1) nach einem der vorhergehenden Ansprüche, wobei die Verbindungsschnittstellen (7) des mindestens einen primären Geräts (2) und die Verbindungsschnittstellen (7', 7", etc.) der einen oder mehr Erweiterungsmodule (3) standardisiert und gegenseitig identisch und/oder miteinander kompatibel sind, sodass die Anzahl der miteinander verbundenen Erweiterungsmodule (3) und/oder mit dem Gerät (2) im Wesentlichen vollständig erweiterbar ist, wobei das primäre Gerät (2) sich selbst konfiguriert.

5. Das Rapid Prototyping-System (1) nach einem der vorhergehenden Ansprüche, wobei die Verbindungsschnittstellen (7, 7', 7" etc.) auf Hardware-Ebene direkt einsteckbar sind, d. h. "Plug and Play".

6. Das Rapid Prototyping-System (1) nach einem der vorhergehenden Ansprüche, wobei jedes funktionale Element des Rapid Prototyping-Systems (1) im Rapid Prototyping-System (1) enthalten ist, wobei das Rapid Prototyping-System (1) tragbar ist.

7. Das Rapid Prototyping-System (1) nach einem der vorhergehenden Ansprüche, wobei das primäre Gerät (2) mindestens ein Modul (4) für drahtlose Kommunikation, z.B. Funkfrequenz, optisch, akustisch, Ultraschall oder andere umfasst, um mit dem Terminal (5) zu kommunizieren.

8. Das Rapid Prototyping-System (1) nach Anspruch 7, wobei das primäre Gerät (2) mindestens ein Stromversorgungssystem (6) und das Modul für drahtlose Kommunikation (4) unter Verwendung der Bluetooth Low Energy Technologie umfasst, sodass das Rapid Prototyping-System (1) ein energiesparendes System ist.

9. Das Rapid Prototyping-System (1) nach einem der vorhergehenden Ansprüche, wobei eines der verbundenen Erweiterungsmodule (3) ein wiederaufladbares Batteriemodul (3.3) ist, das zur Stromversorgung des Rapid Prototyping-Systems verwendet wird.

10. Das Rapid Prototyping-System (1) nach einem der vorhergehenden Ansprüche, wobei das Terminal (5) ein Tablet, ein PC oder ein Smartphone ist.

## Revendications

1. Un système de prototypage rapide (1) pour le prototypage électrique et électronique, comprenant au moins un dispositif principal (2), un terminal (5) permettant d'interagir avec au moins une partie du dispositif principal (2), et une pluralité de modules d'extension supplémentaires (3) connectés audit dispositif principal (2), où ces modules d'extension (3) sont des modules sensiblement standardisés permettant la communication et la reconnaissance de chacun des modules d'extension (3) à partir dudit au moins un dispositif principal (2),ces modules (3) étant connectés audit dispositif principal (2) et entre eux au moyen d'interfaces de connexion (7, 7', 7"), où lesdites interfaces de connexion (7, 7', 7", 7n) comprennent des broches connectables réciproquement, placées sur les modules d'extension (3) et sur le dispositif principal (2), pour coupler ces modules entre eux et avec ledit dispositif principal, lesdites broches comprenant des contacts électriques (15) pour la communication entre les modules et la transmission d'énergie, et étant configurées pour être insérées dans des cavités femelles (16) comprises dans les modules (3), les broches étant réalisées au moyen de corps prismatiques (14) supportant des contacts électriques (15) conçus pour s'insérer dans les cavités femelles (16) incluses dans un des autres modules et contenant à leur tour les contacts électriques (15), où pour chaque interface de connexion, lesdits corps prismatiques (14) sont constitués d'un premier ensemble de deux corps prismatiques (14) inclinés l'un par rapport à l'autre et d'un second ensemble de deux corps prismatiques (14) inclinés l'un par rapport à l'autre de manière à être positionnés de manière spéculaire par rapport audit premier ensemble de deux corps prismatiques (14) par rapport à un plan perpendiculaire au module (3), deux des corps prismatiques étant parallèles entre eux, aux bords du module respectif et au plan ; ledit dispositif principal (2) étant configuré pour reconnaître chacun des modules d'extension (3) connectés au dispositif (2), par reconnaissance d'un identifiant unique de chaque module d'extension (3), cette reconnaissance étant une condition préalable à l'autoconfiguration du niveau de dispositif principal (2), qui par reconnaissance du module, lui attribue dynamiquement une adresse spécifique pour la communication bus entre au moins ledit dispositif et ledit module (3), où ledit terminal (5) interagit avec le dispositif principal (2) pour le paramétrage et la réception des données desdits modules d'extension.

2. Le système de prototypage rapide (1) selon la revendication 1, où ledit au moins un dispositif principal (2) et lesdits modules d'extension (3) sont sensiblement fermés ou intégrés dans un boîtier externe, ledit boîtier comprenant au moins lesdites interfaces de connexion (7, 7', 7"), telles que des fentes ou des zones d'insertion pour la connexion à d'autres modules (3), ou des capteurs ou éléments supplémentaires.

3. Le système de prototypage rapide (1) selon l'une quelconque des revendications précédentes, où ledit dispositif principal (2) et lesdits modules d'extension (3) sont produits dans un ou plusieurs types standard, chacun de ces types étant distingué par un identifiant unique permettant une reconnaissance immédiate par chaque autre dispositif (2) et/ou module (3).

4. Le système de prototypage rapide (1) selon l'une quelconque des revendications précédentes, où lesdites interfaces de connexion (7) dudit au moins un dispositif principal (2) et desdites interfaces de connexion (7', 7", etc.) dudit ou desdits modules d'extension (3) sont standardisées et mutuellement identiques et/ou compatibles, par conséquent, le nombre de modules d'extension (3) connectés entre eux et/ou audit dispositif (2) est pratiquement entièrement extensible, ledit dispositif principal (2) étant auto-configurable.

5. Le système de prototypage rapide (1) selon l'une quelconque des revendications précédentes, où lesdites interfaces de connexion (7, 7', 7", etc.) sont directement enfichables au niveau matériel, c'est-à-dire "prêt à l'emploi".

6. Le système de prototypage rapide (1) selon l'une quelconque des revendications précédentes, où chaque élément fonctionnel du système de prototypage rapide (1) est intégré au système de prototypage rapide (1), ledit système de prototypage étant portable.

7. Le système de prototypage rapide (1) selon l'une quelconque des revendications précédentes, où ledit dispositif principal (2) comprend au moins un module (4) de communication sans fil, par exemple radiofréquence, optique, sonore, ultrasonique ou autre, pour communiquer avec ledit terminal (5).

8. Le système de prototypage rapide (1) selon la revendication 7, où ledit dispositif principal (2) comprend au moins un système d'alimentation (6) et ledit module de communication sans fil (4) utilisant la technologie Bluetooth basse consommation, ledit système de prototypage rapide (1) étant ainsi un système à faible consommation.

9. Le système de prototypage rapide (1) selon l'une des revendications précédentes, où l'un des modules d'extension connectés (3) est un module de batterie rechargeable (3.3) utilisé pour l'alimentation du système de prototypage rapide.

10. Le système de prototypage rapide (1) selon l'une quelconque des revendications précédentes, où ledit terminal (5) est une tablette, un ordinateur ou un smartphone.
